(19) Europäisches Patentamt
European Patent Office
Office européen des brevets

(11) EP 0 973 397 B1

(12) **FASCICULE DE BREVET EUROPEEN**

(45) Date de publication et mention de la délivrance du brevet:
**21.05.2003 Bulletin 2003/21**

(21) Numéro de dépôt: **97948972.1**

(22) Date de dépôt: **02.12.1997**

(51) Int Cl.[7]: **A01N 43/50**
// (A01N43/50, 47:12, 43:54, 43:50, 43:30), A01N37:40

(86) Numéro de dépôt international:
**PCT/FR97/02170**

(87) Numéro de publication internationale:
**WO 99/027788 (10.06.1999 Gazette 1999/23)**

(54) **NOUVELLE COMPOSITION FONGICIDE COMPRENANT UNE 2-IMIDAZOLINE-5-ONE**

NEUE FUNGIZIDE MISCHUNG, DIE EIN 2-IMIDAZOLIN-5-ONE ENTHÄLT

NOVEL FUNGICIDE COMPOSITION CONTAINING A 2-IMIDAZOLINE-5-ONE

(84) Etats contractants désignés:
**AT BE CH DE DK ES FR GB GR IE IT LI LU NL PT SE**

(43) Date de publication de la demande:
**26.01.2000 Bulletin 2000/04**

(73) Titulaire: **Bayer CropScience S.A.**
**69009 Lyon (FR)**

(72) Inventeurs:
- **CHAZALET, Maurice**
**F-69480 Anse (FR)**
- **LATORSE, Marie-Pascale**
**F-69210 Sourcieux les Mines (FR)**
- **MERCER, Richard**
**F-69130 Ecully (FR)**

(56) Documents cités:
**EP-A- 0 551 048**
**WO-A-96/03044**
**FR-A- 2 751 845**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 0 973 397 B1

## Description

La présente invention a pour objet de nouvelles compositions fongicides comprenant une 2-imidazoline-5-one, destinées notamment à la protection des cultures. Elle concerne également un procédé pour protéger les cultures contre les maladies fongiques.

On connaît, notamment par la demande de brevet européen EP 551048, des composés dérivés de 2-imidazoline-5-ones à action fongicide, permettant de prévenir la croissance et le développement de champignons phytopathogènes qui attaquent ou sont susceptibles d'attaquer les cultures.

La demande de brevet internationale WO 96/03044 donne également à connaître un certain nombre de compositions fongicides comprenant une 2-imidazoline-5-one en association avec une ou plusieurs matières actives fongicides.

Cependant, il est toujours souhaitable d'améliorer les produits utilisables par l'agriculteur pour lutter contre les maladies fongiques des cultures, et notamment contre les mildious.

Il est également toujours souhaitable de réduire les doses de produits chimiques épandus dans l'environnement pour lutter contre les attaques fongiques des cultures, notamment en réduisant les doses d'application des produits.

Il est enfin toujours désirable d'augmenter le nombre de produits antifongiques à la disposition de l'agriculteur afin que celui-ci trouve parmi eux le mieux adapté à son usage particulier.

Un but de l'invention est donc de fournir une nouvelle composition fongicide, utile pour les problèmes exposés ci-dessus.

Un autre but de l'invention est de proposer une nouvelle composition fongicide utile dans le traitement préventif et curatif des maladies des solanacées.

Un autre but de l'invention est de proposer une nouvelle composition fongicide présentant une efficacité améliorée contre le mildiou et/ou l'alternariose des solanacées.

Un autre but de l'invention est de proposer une nouvelle composition fongicide présentant une efficacité améliorée contre le mildiou et/ou l'oïdium et/ou le botrytis de la vigne.

Il a maintenant été trouvé que ces buts pouvaient être atteints en totalité
ou en partie grâce aux compositions fongicides selon la présente invention.

La présente invention a donc pour objet en premier lieu des compositions fongicides comprenant un composé (I) de formule :

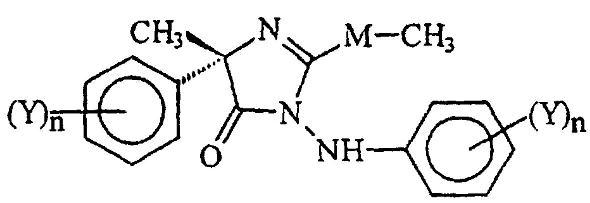

(I)

dans laquelle :

- M représente un atome d'oxygène ou de soufre ;
- n est un nombre entier égal à 0 ou 1 ;
- Y est un atome de fluor ou de chlore, ou un radical méthyle ;

et un composé (II) choisi dans le groupe comprenant :

- le composé (IIA) ou propamocarbe, encore appelé propyl 3-(diméthlylamino)propylcarbamate;
- un composé (IIB) de formule (IIB)

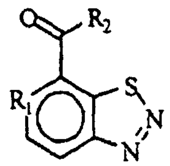

(IIB)

dans laquelle :

- R1 est l'atome d'azote ou le groupe -CH, et
- $R_2$ est le groupe thiométhyl $SCH_3$ ou le groupe diethylamino $N(C_2H_5)_2$,
- le composé (IIC) ou cyprodinil, encore appelé 2-phenylamino-4-cyclopropyl-6-methyl-pyrimidine ;
- le composé (IID) qui est l'acide 2-hydroxy-benzoïque ou acide salicylique, ses esters et ses sels, notamment de métaux alcalins et alcalino-terreux;
- le composé (IIF) ou 8-t-butyl-2-(N-ethyl-N-n-propylamino)-methyl-1,4-dioxaspiro[4.5]decane, encore appelé spiroxamine ;
- le composé (IIG) ou ester isopropylique de l'acide carbamique [2-méthyl-1-(1-p-tolyl-éthylcarbamoyl)-propyl], encore appelé iprovalicarb ;
- le composé (IIH) ou 4-chloro-2-cyano-l-dimethylsulfamoyl-5-(4-methylphenyl)imidazole ;

le rapport composé (I)/composé (II) étant compris entre 0,01 et 50, de préférence entre 0,1 et 10.

Il est bien entendu que les dites compositions fongicides peuvent renfermer un seul composé (II) ou plus d'un tel composé, par exemple 1, 2 ou 3 composés (II) selon l'utilisation à laquelle elles sont destinées.

Les compositions selon l'inventions sont avantageuses pour lutter notamment contre les mildious des solanacées, telles que les pommes de terre ou les tomates, ainsi que contre le mildiou et l'oïdium de la vigne.

Le composé (I) est connu, notamment par la demande de brevet EP 629616.

Le composé (IIA) ou propamocarbe est un fongicide décrit dans le Pesticide Manual 10ème édition, publié par le British Crop Protection Council pages 843.

Le composé (IIB) et son utilisation sont connus notamment par les demandes de brevet européen EP 313512, EP 420803, EP 690061.

Le composé (IIC), ou cyprodinil, est décrit dans la demande de brevet européen EP 310550.

Le composé (IIF) et son utilisation comme fongicide sont décrits dans la demande de brevet européen EP 0 281842.

Le composé (IIG) et son utilisation comme fongicide sont décrits dans au moins une des demandes de brevet européen EP 0398072 ou EP 0472996.

Le composé (IIH) et son utilisation comme fongicide sont décrits dans au moins l'une des demandes de brevet européen EP 0 298196 ou EP 0705823.

Le rapport composé (I)/composé (II) est défini comme étant le rapport du poids de ces 2 composés. Il en est de même pour tout rapport de 2 composés chimiques, ultérieurement mentionné dans le présent texte, dans la mesure où une définition différente de ce rapport n'est pas expressément indiquée.

Ces compositions améliorent généralement de façon notable l'action respective et isolée du composé (I) et du composé (II) pour un certain nombre de champignons particulièrement nuisibles dans les cultures, notamment pour les solanacées, plus particulièrement pour le mildiou des solanacées, tout en conservant une absence de phytotoxicité vis-à-vis de ces cultures. Il en découle donc une amélioration du spectre d'activité et une possibilité de diminuer la dose respective de chaque matière active utilisée, cette dernière qualité étant particulièrement importante pour des raisons écologiques aisément compréhensibles.

On préfère les compositions fongicides selon l'invention pour lesquelles le composé (I) est le composé de formule (I) dans laquelle M est un atome de soufre et n est égal à 0, encore appelé la (4-S) 4-méthyl-2-méthylthio-4-phényl-1-phénylamino-2-imidazoline-5-one.

Dans les compositions selon l'invention, le rapport composé (I)/composé (II) est avantageusement choisi de manière à produire un effet synergique. On entend par effet synergique notamment celui défini par Colby S.R. dans un article intitulé "Calcul des réponses synergiques et antagonistes des combinaisons herbicides" paru dans la revue Weeds, 1967, 15, p. 20-22. Ce dernier article utilise la formule :

$$E = X + Y - XY/100$$

dans laquelle E représente le pourcentage attendu d'inhibition de la maladie pour l'association des deux fongicides à des doses définies (par exemple égales respectivement à x et y), X est le pourcentage d'inhibition observé de la maladie par le composé (I) à une dose définie (égale à x), Y est le pourcentage d'inhibition observé de la maladie par le composé (II) à une dose définie (égale à y). Quand le pourcentage d'inhibition observé de l'association est plus grand que E, il y a effet synergique.

On entend également par effet synergique celui défini par l'application de la méthode de Tammes, "Isoboles, a graphic représentation of synergism in pesticides" Netherlands Journal of Plant Pathology, 70(1964), p. 73-80.

Les domaines de rapport composé (I)/composé (II) indiqués ci-dessus ne sont nullement limitatifs de la portée de l'invention, mais sont plutôt cités à titre indicatif, l'homme du métier étant tout à fait en mesure d'effectuer des essais complémentaires pour trouver d'autres valeurs du rapport de doses de ces 2 composés, pour lesquels un effet synergique est observé.

Selon une première variante préférée des compositions selon l'invention, le composé (II) est choisi dans le groupe comprenant les composés (IIA), (IIB), (IIC), (IID). Ces compositions présentent notamment des propriétés synergiques avantageuses.

Selon un aspect davantage préféré de cette première variante des compositions selon l'invention, le composé (II) est le composé (IIA) ou propamocarbe. On obtient dans ce cas une protection contre les mildious des solanacées particulièrement améliorée.

De manière préférée, lorsque le composé (II) est le propamocarbe, le rapport composé (I)/composé (II) est compris entre 0,01 et 10, de préférence entre 0,05 et 1, encore plus préférentiellement entre 0,1 et 1.

Selon un autre aspect davantage préféré de cette première variante des compositions selon l'invention, le composé (II) est le composé (IIB).

Dans ce cas le composé de formule (IIB) dans laquelle $R_1$ représente -CH et $R_2$ représente $-SCH_3$ est plus particulièrement préféré. Ce dernier composé est le S-méthyl ester de l'acide 1,2,3-benzothiadiazole-7-carbothioïque (encore appelé CGA 245704).

Selon un autre aspect de la première variante des compositions selon l'invention, le composé (II) est le composé (IID).

De manière préférée, lorsque le composé (II) est le composé (IIB) ou (IID), le rapport composé (I)/composé (II) est compris entre 0,05 et 50, de préférence entre 0,1 et 10, encore plus préférentiellement entre 0,1 et 5.

Selon un autre aspect de la première variante des compositions selon l'invention, le composé (II) est le composé (IIC).

De manière préférée, lorsque le composé (II) est le composé (IIC), le rapport composé (I)/composé (II) est compris entre 0,05 et 50, de préférence entre 0,1 et 10, encore plus préférentiellement entre 0,2 et 1.

Selon une troisième variante des compositions selon l'invention, le composé (II) est le composé (IIF).

De manière préférée, lorsque le composé (II) est le composé (IIF), le rapport composé (I)/composé (II) est compris entre 0,05 et 10, de préférence entre 0,1 et 5.

Selon une quatrième variante des compositions selon l'invention, le composé (II) est le composé (IIG).

De manière préférée, lorsque le composé (II) est le composé (IIG), le rapport composé (I)/composé (II) est compris entre 0,25 et 5, de préférence entre 0,5 et 4.

Selon un mode de réalisation encore plus préféré des compositions selon l'invention, celles-ci comprennent avantageusement dans ce dernier cas outre les composés (I) et (IIG), un composé (IIG'), choisi parmi :

- les sels d'un mono-alkyl phosphite et d'un cation métallique mono-, di- ou tri-valent, tel que le fosétyl-Al, ou
- l'acide phosphoreux et ses sels alcalins ou alcalino-terreux .

Le ratio molaire (IIG)/(IIG') des composés (IIG) et (IIG') est généralement compris entre 0,037 et 0,37 , de préférence entre 0,018 et 1,8. Au sens de la présente invention, on entend par ratio molaire (IIG)/(IIG') le rapport calculé de la façon suivante. Le numérateur de ce rapport est égal au nombre de moles du composé (IIG). Le dénominateur de ce rapport est égal au nombre de moles du composé (IIG') multiplié par le nombre de moles d'acide phosphoreux résultant de l'hydrolyse d'une mole de composé (IIG'). L'acide phosphoreux est le composé de formule brute $H_3PO_3$.

On préfère utiliser le Fosétyl-Al comme composé (IIG'). Le ratio pondéral (IIG)/(IIG') des composés (IIG) et (IIG') est dans ce cas compris entre 0,01 et 1, de préférence entre 0,05 et 5.

Selon une cinquième variante des compositions selon l'invention, le composé (II) est le composé (IIH). Dans ce cas, le rapport composé (I)/composé (II) est compris entre 0,05 et 5, de préférence entre 0,5 et 2.

Outre le composé (I) et le composé (II), les compositions selon l'invention comprennent un support inerte convenable en agriculture et éventuellement un tensio actif convenable en agriculture. Dans ce qui suit, on désigne par le terme de matière active la combinaison du composé (I) avec le composé (II), et les pourcentages cités sont, sauf mention contraire, des pourcentages poids/poids.

Par le terme "support", dans le présent exposé, on désigne une matière organique ou minérale, naturelle ou synthétique, avec laquelle la matière active est associée pour faciliter son application sur la plante ou sur le sol. Ce support est donc généralement inerte et il doit être acceptable en agriculture, notamment sur la culture traitée. Le support peut être solide (notamment : argiles, silicates naturels ou synthétiques, silice, résines, cires, engrais solides) ou liquide (notamment : eau, alcools, cétones, fractions de pétrole, hydrocarbures aromatiques ou paraffiniques, hydrocarbures chlorés, gaz liquéfiés).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est souvent requise parce que la matière active et/ou le support inerte ne sont pas solubles dans l'eau et que l'agent vecteur de l'application est l'eau.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, les compositions selon l'invention peuvent être associées à tous les additifs solides ou liquides correspondant aux techniques habituelles de formulation agrochimique.

Les techniques d'application sont bien connues de l'homme de métier et elles peuvent être utilisées sans inconvénient dans le cadre de la présente invention. On pourra citer par exemple la pulvérisation.

Parmi les compositions, on peut citer de manière générale les compositions solides ou liquides.

Comme formes de compositions solides, on peut citer les poudres pour poudrage ou dispersion (à teneur en matière active pouvant aller jusqu'à 100 %) et les granulés, notamment ceux obtenus par extrusion, par compactage, par imprégnation d'un support granulé, par granulation à partir d'une poudre (la teneur en matière active dans ces granulés étant comprise entre 1 et 80 % pour ces derniers cas).

Les compositions peuvent encore être utilisées sous forme de poudre pour poudrage ; on peut ainsi utiliser une composition comprenant 50 g de matière active, 10 g de silice finement divisée, 10 g de pigment organique et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes, les granulés dispersables.

Les concentrés émulsionnables ou solubles comprennent le plus souvent 10 à 80 % de matière active, les émulsions ou solutions prêtes à l'application contenant, quant à elles, 0,01 à 20 % de matière active.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précedemment cités.

A partir de ces concentrés, on peut obtenir par dilution avec de l'eau des émulsions de toute concentration désirée.

Les suspensions concentrées, également applicables en pulvérisation, sont préparées de manière à obtenir un produit fluide stable ne se déposant pas et elles contiennent habituellement de 10 à 75 % de matière active, de 0.5 à 15 % d'agents tensioactifs, de 0,1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc...

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée.

A la place des poudres mouillables, on peut réaliser des pâtes. Les conditions et modalités de réalisation et d'utilisation de ces pâtes sont semblables à celles des poudres mouillables ou poudres à pulvériser.

Les granulés dispersables sont habituellement préparés par agglomération, dans des systèmes de granulation appropriés, des compositions de type poudre mouillable.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les compositions fongicides selon l'invention contiennent habituellement de 0,5 à 95 % de la combinaison du composé (I) et du composé (II).

Il peut s'agir de la composition concentrée c'est-à-dire du produit commercial associant le composé (I) et le composé (II). Il peut s'agir également de la composition diluée prête à être appliquée sur les cultures à traiter. Dans ce dernier cas la dilution à l'eau peut être effectuée soit à partir d'une composition concentrée commerciale renfermant le composé (I) et le composé (II) (ce mélange est appelé " prêt à l'emploi " ou encore " ready mix ", en langue anglaise), soit au moyen du mélange extemporané (appelé en anglais " tank mix ") de deux compositions concentrées commerciales renfermant chacune le composé (I) et le composé (II).

L'invention a enfin pour objet un procédé de lutte, à titre curatif ou préventif, contre les champignons phytopathogènes des cultures, caractérisé en ce que l'on applique aux végétaux à traiter une quantité efficace et non phytotoxique d'une composition fongicide selon l'invention.

Les champignons phytopathogènes des cultures qui peuvent être combattus par ce procédé sont notamment ceux :

- du groupe des oomycètes :
  - du genre *Phytophthora* cet que *Phytophthora infestans* (mildiou des solanacées, notamment de la pomme de terre ou de la tomate),
  - de la famille des Péronosporacées, notamment *Plasmopara viticola* (mildiou de la vigne), *Plasmopara halstedei* (mildiou du tournesol), *Pseudoperonospora sp* (notamment mildiou des cucurbitacees et du houblon), *Bremia lactucae* (mildiou de la laitue), *Peronospora tabacinae* (mildiou du tabac), *Peronospora parasitica* (mildiou du chou),
- du groupe des adélomycètes :
  - du genre *Alternaria*, par exemple *Alternaria solani* (alternariose des solanées, et notamment de la tomate et des pommes de terre ),
  - du genre *Guignardia,* notamment *Guignardia bidwelli* (black rot de la vigne),
  - du genre *Oïdium,* par exemple oïdium de la vigne (*Uncinula necator*) ; oïdium des cultures légumières, par exemple *Erysiphe polygoni* (oidium des crucifères) ; *Leveillula taurica, Erysiphe cichoracearum*, *Sphaerotheca fuligena*; (oïdium des cucurbitacées, des composées, de la tomate) ; *Erysiphe communis* (oïdium de la betterave et du chou) ; *Erysiphe pisi* (oïdium du pois, de la luzerne) ; *Erysiphe polyphaga* (oïdium du haricot et du concombre) ; *Erysiphe umbelliferarum* (oïdium des ombellifères, notamment de la carotte) ; *Sphaerotheca humuli* (oïdium du houblon).

Par l'expression "on applique aux végétaux à traiter", on entend signifier, au sens du présent texte, que les compositions fongicides objets de l'invention peuvent être appliquées au moyen de différents procédés de traitement tels que :

- la pulvérisation sur les parties aériennes des dits végétaux d'un liquide comprenant une des dites compositions,
- le poudrage, l'incorporation au sol de granulés ou de poudres, l'arrosage, autour des dits végétaux, et dans le cas des arbres l'injection ou le badigeonnage.

La pulvérisation d'un liquide sur les parties aériennes des cultures à traiter est le procédé de traitement préféré.

Par "quantité efficace et non phytotoxique", on entend une quantité de composition selon l'invention suffisante pour permettre le contrôle ou la destruction des champignons présents ou susceptibles d'apparaître sur les cultures, et n'entraînant pour lesdites cultures aucun symptôme de phytotoxicité. Une telle quantité est susceptible de varier dans de larges limites selon le champignon à combattre, le type de culture, les conditions climatiques, et la nature du composé (II) compris dans la composition fongicide selon l'invention. Cette quantité peut être déterminé par des essais systématiques au champ, à la portée de l'homme du métier.

Dans les conditions usuelles de la pratique agricole, une quantité de composition fongicide selon l'invention correspondant à une dose de composé (I) comprise entre 10 et 500 g/ha, de préférence entre 20 et 300 g/ha, donne

généralement de bons résultats.

Lorsque le composé (II) est le composé (IIA), la quantité de composition fongicide selon l'invention correspond avantageusement à une dose de composé (II) comprise entre 50 et 2500 g/ha, de préférence entre 200 et 1500 g/ha.

Lorsque le composé (II) est le composé (IIB), la quantité de composition fongicide selon l'invention correspond avantageusement à une dose de composé (II) comprise entre 2 et 100 g/ha, de préférence entre 5 et 50 g/ha.

Lorsque le composé (II) est le composé (IIC), la quantité de composition fongicide selon l'invention correspond avantageusement à une dose de composé (II) comprise entre 20 et 2000 g/ha, de préférence entre 100 et 550 g/ha.

Lorsque le composé (II) est le composé (IID), la quantité de composition fongicide selon l'invention correspond avantageusement à une dose de composé (II) comprise entre 20 et 5000 g/ha, de préférence entre 50 et 1000 g/ha.

Lorsque le composé (II) est le composé (IIF), la quantité de composition fongicide selon l'invention correspond avantageusement à une dose de composé (II) comprise entre 100 et 1000 g/ha, de préférence entre 300 et 800 g/ha.

Lorsque le composé (II) est le composé (IIG), la quantité de composition fongicide selon l'invention correspond avantageusement à une dose de composé (II) comprise entre 50 et 250 g/ha, de préférence entre 100 et 200 g/ha.

Lorsque le composé (II) est le composé (IIH), la quantité de composition fongicide selon l'invention correspond avantageusement à une dose de composé (II) comprise entre 100 et 400 g/ha, de préférence entre 150 et 350 g/ha.

Les exemples suivants sont donnés à titre purement illustratif de l'invention, qu'ils ne limitent en aucune façon.

Dans ces exemples, de même que dans les figures auxquelles il est fait référence, on entend par composé (I) désigner la (4-S) 4-méthyl-2-méthylthio-4-phényl-1-phénylamino-2-imidazoline-5-one, et par composé (IIB) le S-méthyl ester de l'acide 1,2,3-benzothiadiazole-7-carbothioïque (ou CGA 245704). De même, on entend désigner par composé (IIG') le Fosétyl-Al.

<u>Exemple 1</u> : Essai en plein champ d'une composition comprenant les composés (I) et (IIA) contre le mildiou de la pomme de terre (*Phythophtora infestans*) :

On utilise une composition comprenant le composé (I) sous forme de suspension concentrée à 500 g/l et une composition comprenant le composé (IIA) ou propamocarbe sous forme d'un concentré soluble à 724 g/l.

Ces 2 compositions sont mélangées de manière à obtenir un ratio composé (I)/composé (IIA) égal à 0,15 et 0,10.

Le mélange est appliqué après dilution à l'eau à raison de 500 l/ha sur pommes de terre 2 mois après la plantation des tubercules. Les doses appliquées sont indiquées dans le tableau ci-dessous. Cette application est répétée 5 fois tous les 6 jours.

Après la 2ème application, on procède à la contamination par pulvérisation des spores de *Phythophtora infestans*.

On procède à l'observation des résulats 3 jours après la 5ème application. Pour celà on évalue de manière visuelle (par rapport à une parcelle non traitée mais également contaminée) la contamination C (ou encore degré d'attaque) exprimée par le nombre de tâches noirâtres (causées par la maladie) par parcelles. On calcule l'efficacité E selon la formule dite de Abbott:

$$E\ (\text{en}\ \%) = [(C_{\text{témoin non traité}} - C_{\text{parcelle traitée}}) / C_{\text{témoin non traité}}] \times 100$$

Les résultats sont rassemblés dans le tableau suivant :

| Composition testée | Doses (en g/ha) | Ratio (I)/(IIA) | Efficacité (en %) |
|---|---|---|---|
| (I) + (IIA) | 100 + 1000 | 0,1 | 96 |
| (I) + (IIA) | 100 + 666 | 0,15 | 95 |

Une parcelle voisine traitée par du mancozèbe à raison de 1600 g/ha a donné lieu à une efficacité de 90%.

<u>Exemple 2</u> :

On répète l'exemple 1 sur un champ de pomme de terre situé dans une autre région. On procède à l'observation des résultats 12 jours après le Sème traitement. Pour celà, et en raison de l'intensité de l'attaque de la maladie, on évalue le pourcentage de surface foliaire détruite.

On calcule l'efficacité selon la même formule que précédemment.

On obtient pour le ratio de 0,10 une efficacité de 79 % et pour le ratio de 0,15 une efficacité de 77 %

Une parcelle voisine traitée par du mancozèbe à raison de 1600 g/ha a donné lieu à une efficacité de 59%.

Exemple 3 : Essai en serre d'une composition comprenant les composés (I) et (IIB) contre le mildiou de la vigne (*Plasmopara viticola*) :

On prépare une suspension de 60 mg comprenant les composés (I) et (IIB) dans un mélange liquide constitué de 0,3 ml d' un agent tensioactif (oléate de dérivé polyoxyéthyléné du sorbitan) dilué à 10% dans l'eau et de 60 ml d'eau.
Le rapport composé (I)/composé (IIB) dans les suspensions préparées est égal à :

0,125 ; 0,25 ; 0,5 ; 2.

Des boutures de vigne (Vitis vinifera), variété Chardonnay, sont cultivées dans des godets. Lorsque ces plants sont âgés de 2 mois (stade 8 à 10 feuilles, hauteur de 10 à 15 cm), ils sont traités par pulvérisation au moyen des suspensions ci-dessus.
Des plants utilisés comme témoins sont traités par une suspension similaire mais ne contenant pas de matière active ("blanc de formulation ).
Après séchage pendant 4 jours, on contamine chaque plant par pulvérisation d'une suspension aqueuse de spores de *Plasmopara viticola* obtenue à partir de feuilles sporulées contaminées 7 jours auparavant. Ces spores sont mises en suspension à raison de 100 000 unités par $cm^3$.
Les plants contaminés sont ensuite mis en incubation pendant deux jours à 18°C environ, en atmosphère saturée d'humidité puis pendant 5 jours à 20-22°C sous 90-100% d'humidité relative.
L'observation des résultats se fait 7 jours après la contamination, en comparaison avec les plants témoins. On mesure la contamination C par appréciation visuelle du pourcentage de surface foliaire contaminée (aspect blanchâtre). On calcule, à partir de C, l'efficacité par la même formule qu'à l'exemple 1.
On calcule, à partir de l'efficacité, la CI90.
La CI90 est définie comme étant le poids de mélange (défini pour un ratio fixé des composés (I) et (IIB)) qu'il est nécessaire d'appliquer pour obtenir une efficacité de 90%. La CI90 est exprimée sous la forme du poids correspondant du composé (I) dans le mélange pour un ml de liquide pulvérisé sur les plants.
Les résultats sont rassemblés dans le tableau suivant :

| Ratio : composé (I)/composé (IIB) | CI90 (mg/l) |
|---|---|
| 0,125 | 17 |
| 0,25 | 17 |
| 0,5 | 20 |
| 1 | 35 |
| 2 | 18 |

Exemple 4 : Essai en serre d'une composition comprenant le composé (I) et le sel de sodium de l'acide salicylique (composé IID) contre le mildiou de la pomme de terre (*Phytophthora infestans*) :

On utilise une suspension concentrée de composé (I) et une solution aqueuse du sel de sodium de l'acide salicylique.
On mélange ces 2 liquides de manière à obtenir un ratio composé (I)/composé (IID) égal à : 0,25 - 0,5 - 1 et 2.
Des plants de pomme de terre (variété Bintje) sont cultivés dans des godets. Lorsque ces plants sont agés d'un mois (stade 5 à 6 feuilles, hauteur 12 à 15 cm), ils sont traités par pulvérisation au moyen d'un liquide comprenant un des composés (I) et (IID) soit seul, soit en mélange dans le ratio indiqué précédemment.
Au bout de 4 jours, on contamine chaque plant par pulvérisation au moyen d'une suspension aqueuse de spores (30000 sp/$cm^3$) de *Phytophthora infestans*.
Après cette contamination, les plants de pomme de terre sont mis en incubation pendant 5 jours à 18°C environ en atmosphère saturée d'humidité.
L'obtention des résultats se fait 5 jours après la mise en incubation, en comparaison avec les plants témoins non traités mais également contaminés.
Les résultats d'efficacité obtenus sont reportés sous forme de points, correspondant à 70% de destruction du parasite et placés dans un diagramme de Tammes qui comporte en abcisse les doses de composé (I) exprimées

en mg/l et en ordonnée les doses de composé (IID) également en mg/l.

On obtient le diagramme de la figure 1 dans lequel il apparaît que le sel de sodium de l'acide salicylique n'a, lorsqu'il est appliqué seul, aucune efficacité dans les conditions de l'essai. Il apparaît cependant que l'addition de ce sel permet, de façon parfaitement inattendue, d'abaisser la dose de composé (I) nécessaire à la destruction de 70 % du parasite en dessous de 36 mg/l qui correspond à la dose de composé (I) seul qu'il est nécessaire d'appliquer pour obtenir ce même pourcentage de destruction.

La disposition des points obtenue indique donc un effet unilatéral, qualifié en langue anglaise selon la méthode de Tammes citée précédemment de "one sided effect". Cette disposition correspond à une isobole de type II selon ladite méthode (page 74 de la référence bibliographique correspondante déjà citée) et est caractéristique d'une synergie.

Exemple 5 : Essai en serre *in vivo* de l'association du composé (I) avec le composé (IIA) propamocarb sur *Plasmopara viticola* (mildiou de la vigne) par traitement préventif à 4 jours :

On utilise un concentré soluble à 722 g/l de propamocarbe, et un granulé dispersable à 70 % de composé (I).

On prépare à partir de ces compositions par dilution à l'eau des suspensions diluées correspondant à un volume de pulvérisation de 500 l de liquide de pulvérisation par ha.

On mélange ces 2 liquides de manière à obtenir un ratio : composé (I)/propamocarb, égal à : 0,015 - 0,125 - 0,5.

Des boutures de vigne (Vitis vinifera), variété Chardonnay, sont cultivées dans des godets. Lorsque ces plants sont âgés de 2 mois, ils sont traités par pulvérisation au moyen des liquides ci-dessus, pris isolément ou en mélange.

Après 4 jours, on contamine chaque plant par pulvérisation d'une suspension aqueuse de spores de *Plasmopara viticola* obtenue à partir de feuilles sporulées contaminées 7 jours auparavant. Ces spores sont mises en suspension à raison de 100 000 unités par $cm^3$.

Les plants contaminés sont ensuite mis en incubation pendant deux jours à 18°C environ, en atmosphère saturée d'humidité puis pendant 5 jours à 20-22°C sous 90-100% d'humidité relative.

La lecture se fait 7 jours après la contamination, en comparaison avec les plants témoins, c'est-à-dire des plants non traités mais contaminés.

On estime de façon visuelle la surface des feuilles présentant sous leur face inférieure un aspect blanchâtre correspondant à l'attaque du champignon et on obtient le degré d'attaque en divisant par la surface foliaire totale.

Puis on calcule l'efficacité au moyen de la formule de Abbott et du résultat sur plant témoin.

Les résultats d'efficacité sont reportés sous forme de points, correspondant à une efficacité de 90% et placés dans un diagramme d' isobole de Tammes qui comporte en abcisse les doses du composé (I) exprimées en mg/l et en ordonnée les doses de propamocarbe également en mg/l.

On obtient le diagramme de la figure 2 dans lequel il apparaît que le propamocarb n'a, lorsqu'il est appliqué seul, aucune efficacité dans les conditions de l'essai. Il apparaît cependant que l'addition de propamocarbe permet, de façon parfaitement inattendue, d'abaisser la dose de composé (I) nécessaire à la destruction de 90 % du parasite en dessous de 8,2 mg/l qui correspond à la dose de composé (I) seul qu'il est nécessaire d'appliquer pour obtenir la même efficacité.

La disposition des points obtenue indique donc un effet unilatéral, qualifié en langue anglaise selon la méthode de Tammes citée précédemment de "one sided effect". Cette disposition correspond à une isobole de type II selon ladite méthode (page 74 de la référence bibliographique correspondante déjà citée) et est caractéristique d'une synergie.

Exemple 6 : Essai en serre *in vivo* d'une composition comprenant les composés (I) et (IIA) (propamocarb) sur *Phytophthora infestans* (mildiou de la pomme de terre) par traitement préventif à 4 jours :

On utilise un concentré soluble à 722 g/l de propamocarbe, et un granulé dispersable à 70 % de composé (I).

On prépare à partir de ces compositions par dilution à l'eau des suspensions diluées correspondant à un volume de pulvérisation de 1000 l de liquide de pulvérisation par ha.

On mélange ces 2 liquides de manière à obtenir un ratio composé (I)/propamocarb égal à : 0,125 - 0,25 - 1.

Des plants de pomme de terre (variété Bintje) sont cultivés dans des godets. Lorsque ces plants sont agés d'un mois et demi, on les traite par les liquides ci-dessus pris isolément ou en mélange.

4 jours après le traitement, on coupe des folioles que l'on place sur du papier filtre humidifié dans une boîte de Pétri , et l'on procède à la contamination de ces folioles par dépôt de 10 gouttes d 'une suspension aqueuse de spores (contenant 30 000 sp/$cm^3$) de *Phytophthora infestans*.

Ensuite, les folioles de pomme de terre sont mises en incubation pendant 3 jours à 18°C environ en atmosphère saturée d'humidité.

L'observation des résultats se fait 4 jours après la contamination, en comparaison avec les plants témoins.
On estime de façon visuelle la surface des folioles présentant un aspect grisâtre correspondant à l'attaque du champignon et on obtient le degré d'attaque en divisant cette surface par la surface totale des folioles.
Puis on calcule l'efficacité au moyen de la formule de Abbott et du résultat sur les folioles utilisées comme témoin.
Les résultats obtenus sont reportés sous forme de points, correspondant à 90% de destruction du parasite et placés dans un diagramme de Tammes qui comporte en abcisse les doses de composé (I) exprimées en mg/l et en ordonnée les doses de propamocarbe également en mg/l.
On obtient le diagramme de la figure 3 dans lequel il apparaît que l'addition d'une dose de composé (I) inférieure à 8,7 mg/l (qui correspond à la dose de composé (I) seul qu'il est nécessaire d'appliquer pour obtenir la destruction de 90 % du parasite) permet, de façon parfaitement inattendue, d'abaisser la dose de propamocarbe nécessaire à la destruction de 90 % du parasite en dessous de 553 mg/l (cette valeur correspondant à la dose de propamocarbe seul qu'il est nécessaire d'appliquer pour obtenir ce même pourcentage de destruction).
La disposition des points obtenue indique donc un effet bilatéral, qualifié en langue anglaise selon la méthode de Tammes citée précédemment de "two sided effect". Cette disposition correspond à une isobole de type III selon ladite méthode (page 75 de la référence bibliographique correspondante déjà citée) et est caractéristique d'une synergie.

<u>Exemple 7</u> : Essai en serre *in vivo* d'une composition comprenant les composés (I) et (IIB) (CGA 245704) contre le mildiou de la pomme de terre (*Phytophthora infestans*) :

On prépare une suspension de 60 mg comprenant les composés (I) et (IIB) dans un mélange liquide constitué de 0,3 ml d' un agent tensioactif (oléate de dérivé polyoxyéthyléné du sorbitan) dilué à 10% dans l'eau et de 60 ml d'eau.
Le rapport composé (I)/composé (IIB) dans les suspensions préparées est égal à : 0,125 ; 0,25 ; 0,5 ; 1 .
Des plants de pomme de terre (variété Bintje) sont cultivés dans des godets. Lorsque ces plants sont agés d'un mois et demi, on les traite par les liquides ci-dessus pris isolément ou en mélange.
4 jours après le traitement, on procède à la contamination des plants par pulvérisation d 'une suspension aqueuse de spores (contenant 30 000 sp/$cm^3$) de *Phytophthora infestons*.
Ensuite, les plants de pomme de terre sont mis en incubation pendant 5 jours à 18°C environ, en atmosphère saturée d'humidité.
L'observation des résultats se fait 5 jours après la contamination, en comparaison avec les plants témoins.
On estime de façon visuelle la surface foliaire présentant un aspect grisâtre correspondant à l'attaque du champignon et on obtient le degré d'attaque en divisant cette surface par la surface totale des feuilles.
Puis on calcule l'efficacité au moyen de la formule de Abbott et du résultat sur plant témoin.
Les résultats obtenus sont reportés sous forme de points, correspondant à 70% d'efficacité contre le parasite et placés dans un diagramme de Tammes qui comporte en abcisse les doses de composé (I) exprimées en mg/l et en ordonnée les doses de CGA 245704 également en mg/l.
On obtient le diagramme de la figure 4 dans lequel il apparaît que le CGA 245704 n'a, lorsqu'il est appliqué seul, aucune efficacité dans les conditions de l'essai. Il apparaît cependant que l'addition de CGA 245704 permet, de façon parfaitement inattendue, d'abaisser la dose de composé (I) nécessaire à la destruction de 70 % du parasite en dessous de 177 mg/l qui correspond à la dose de composé (I) seul qu'il est nécessaire d'appliquer pour obtenir la même efficacité.
La disposition des points obtenue indique donc un effet unilatéral, qualifié en langue anglaise selon la méthode de Tammes citée précédemment de "one sided effect". Cette disposition correspond à une isobole de type II selon ladite méthode (page 74 de la référence bibliographique correspondante déjà citée) et est caractéristique d'une synergie.

<u>Exemple 8</u> : Essai en serre *in vivo* d'une composition comprenant le composé (I) et le composé (IIC) (cyprodinil) contre la pourriture grise de la vigne (*Botrytis cinerea*) :

On utilise un granulé dispersable à 70% du composé (I) et un granulé dispersable à 75 % de cyprodinil.
On prépare à partir de ces compositions par dilution à l'eau des suspensions diluées correspondant à un volume de pulvérisation de 1000 l de liquide de pulvérisation par ha.
On mélange ces 2 liquides de manière à obtenir un ratio composé (I)/cyprodinil égal à : 0,2.
Des plants de vigne (variété Chardonnay) sont cultivés dans des godets. Lorsque ces plants sont agés de 2 mois, ils sont traités par pulvérisation au moyen d'un liquide comprenant un des composés (I) et (IIC) soit isolément, soit en mélange dans le ratio indiqué précédemment.
Au bout de 24 heures, on coupe des feuilles des plants traités que l'on place sur du papier filtre humidifié

dans une boîte de Pétri , et l'on procède à la contamination de ces feuilles par dépôt de 10 gouttes d 'une suspension aqueuse de spores (contenant 150 000 sp/$cm^3$) de *Botrytis cinerea*.

Après cette contamination, les feuilles de vigne traitées et contaminées sont placées pendant 6 jours à 20°C environ en atmosphère saturée d'humidité.

On procède alors à l'observation des résultats, en comparaison avec les plants témoins non traités mais également contaminés.

Pour celà, on compte, pour une feuille de vigne, le nombre de gouttes de la suspension de *Botrytis cinerea à* partir desquelles s'est développée une tâche grise correspondant à l'attaque du champignon phytopathogène. Ce nombre est divisé par le nombre de gouttes déposées (égal à 10) et l'on obtient ainsi le degré d'attaque (exprimé en %).

On calcule selon la formule dite de Abbott l'efficacité du traitement (exprimé en %).

Les résultats d'efficacité obtenus sont reportés sous forme de points, correspondant à 90% de destruction du parasite et placés dans un diagramme de Tammes qui comporte en abcisse les doses de cyprodinil exprimées en mg/l et en ordonnée les doses de composé (I) également en mg/l.

On obtient le diagramme de la figure 5 dans lequel il apparaît que le composé (I) n'a, lorsqu'il est appliqué seul, aucune efficacité dans les conditions de l'essai. Il apparaît cependant que l'addition de cyprodinil permet, de façon parfaitement inattendue, d'abaisser la dose de composé (I) nécessaire à la destruction de 90 % du parasite en dessous de 73 mg/l qui correspond à la dose de cyprodinil seul qu'il est nécessaire d'appliquer pour obtenir ce même pourcentage de destruction.

La disposition des points obtenue indique donc un effet unilatéral, qualifié en langue anglaise selon la méthode de Tammes citée précédemment de "one sided effect". Cette disposition correspond à une isobole de type II selon ladite méthode (page 74 de la référence bibliographique correspondante déjà citée) et est caractéristique d'une synergie.

<u>Exemple 9</u> : Essai en serre *in vivo* d'une composition comprenant le composé (I) et le composé (IIC) (cyprodinil) contre l'alternariose du radis (*Alternaria brassicae*) :

On utilise un granulé dispersable à 70% du composé (I) et un granulé dispersable à 75 % de cyprodinil.

On prépare à partir de ces compositions par dilution à l'eau des suspensions diluées correspondant à un volume de pulvérisation de 1000 l de liquide de pulvérisation par ha.

On mélange ces 2 liquides de manière à obtenir un ratio composé (I)/cyprodinil égal à : 0,2 - 0,5 - 1.

Des plantules de radis (variété Pernot) sont cultivées dans des godets. Lorsque ces plantules sont parvenues au stade de 2 feuilles cotylédonnaires, elles sont traitées par pulvérisation au moyen d'un liquide comprenant les composés (I) et (IIC) soit isolément, soit en mélange dans les ratios indiqués précédemment.

24 heures après traitement, on procède à la contamination par pulvérisation d'une suspension aqueuse de spores (contenant 40 000 sp/$cm^{3)}$ de *Alternaria brassicae*.

Après cette contamination, les plantules traitées et contaminées sont placées pendant 10 jours à 20°C environ en atmosphère saturée d'humidité.

On procède alors à l'observation des résultats, en comparaison avec les plantules témoins non traitées mais également contaminées.

Pour celà, on estime de façon visuelle le pourcentage d'attaque par le champignon des feuilles cotylédonnaires, la dite attaque étant reconnaissable par des taches brunes de nécrose. On calcule à partir du degré d'attaque ainsi obtenu (exprimé en %) l'efficacité selon la formule de Abbott par référence au degré d'attaque du témoin.

Les résultats d'efficacité obtenus sont reportés sous forme de points, correspondant à 70% de destruction du parasite et placés dans un diagramme de Tammes qui comporte en abcisse les doses de composé (I) exprimées en mg/l et en ordonnée les doses de cyprodinil exprimées également en mg/l.

On obtient le diagramme de la figure 6 dans lequel il apparaît que l'addition d'une dose de composé (I) inférieure à 167 mg/l (qui correspond à la dose de composé (I) seul qu'il est nécessaire d'appliquer pour obtenir la destruction de 70 % du parasite) permet, de façon parfaitement inattendue, d'abaisser la dose de cyprodinil nécessaire à la destruction de 70 % du parasite en dessous de 178 mg/l (cette valeur correspondant à la dose de cyprodinil seul qu'il est nécessaire d'appliquer pour obtenir ce même pourcentage de destruction).

La disposition des points obtenue indique donc un effet bilatéral, qualifié en langue anglaise selon la méthode de Tammes citée précédemment de "two sided effect". Cette disposition correspond à une isobole de type III selon ladite méthode (page 75 de la référence bibliographique correspondante déjà citée) et est caractéristique d'une synergie.

Exemple 10 : Essai en serre *in vivo* d'une composition comprenant le composé (I) et le composé (IIF) (spiroxamine) contre l'oïdium de la vigne (*Uncinula necator*) :

On prépare une suspension de 60 mg comprenant le composé (I) dans un mélange liquide constitué de 0,3 ml d' un agent tensioactif (oléate de dérivé polyoxyéthyléné du sorbitan) dilué à 10% dans l'eau et de 60 ml d'eau.
On utilise un concentré émulsionnable à 500 g/l de spiroxamine.
On prépare à partir de ces compositions par dilution à l'eau des suspensions diluées correspondant à un volume de pulvérisation de 2501 de liquide de pulvérisation par ha.
On mélange ces 2 liquides de manière à obtenir un ratio composé (I)/spiroxamine égal à : 0,33 ; 1 ; 3.
Des plants de vigne (variété Chardonnay) sont cultivés dans des godets. Lorsque ces plants sont agés de 2 mois, ils sont traités par pulvérisation au moyen d'un liquide comprenant un des composés (I) et (IIF) soit isolément, soit en mélange dans un des ratios indiqués précédemment.
Au bout de 24 heures, on procède à la contamination des feuilles de vigne par saupoudrage de spores d'oïdium (*Uncinula necator*) obtenus à partir de feuilles naturellement contaminées.
Après cette contamination, les plants de vigne traités et contaminés sont placés pendant 15 jours à 20°C à une humidité relative de 70 % environ.
On procède alors à l'observation des résultats, en comparaison avec les plants témoins non traités mais également contaminés.
Pour celà, on estime sur l'ensemble des feuilles d'un plant, par rapport à un plant contaminé mais non traité, la surface des taches blanches correspondant au développement du champignon. On obtient ainsi un taux de contamination.
On calcule selon la formule dite de Abbott l'efficacité du traitement (exprimé en %).
Les résultats d'efficacité obtenus sont reportés sous forme de points, correspondant à 70% de destruction du parasite et placés dans un diagramme de Tammes qui comporte en abcisse les doses de spiroxamine exprimées en g/ha et en ordonnée les doses de composé (I) également en g/ha.
On obtient le diagramme de la figure 7 dans lequel il apparaît que le composé (I) n'a, lorsqu'il est appliqué seul, aucune efficacité dans les conditions de l'essai. Il apparaît cependant que l'addition de composé (I) permet, de façon parfaitement inattendue, d'abaisser la dose de spiroxamine nécessaire à la destruction de 70 % du parasite en dessous de 6,6 g/ha qui correspond à la dose de spiroxamine seule qu'il est nécessaire d'appliquer pour obtenir ce même pourcentage de destruction.
La disposition des points obtenue indique donc un effet unilatéral, qualifié en langue anglaise selon la méthode de Tammes citée précédemment de "one sided effect". Cette disposition correspond à une isobole de type II selon ladite méthode (page 74 de la référence bibliographique correspondante déjà citée) et est caractéristique d'une synergie.

Exemple 11 : Essai en serre *in vivo* d'une composition comprenant le composé (I) et le composé (IIF) (spiroxamine) contre l'oïdium de la vigne (*Uncinula necator*) :

On répète l'exemple 10 en fixant le ratio composé (I)/ spiroxamine à : 0,11 ; 0,33 et 1, et en procédant à l'observation des résultats à 22 jours après la contamination.
On obtient le diagramme de la figure 8 dans lequel il apparaît que le composé (I) n'a, lorsqu'il est appliqué seul, aucune efficacité dans les conditions de l'essai. Il apparaît cependant que l'addition de composé (I) permet, de façon parfaitement inattendue, d'abaisser la dose de spiroxamine nécessaire à la destruction de 70 % du parasite en dessous de 61 g/ha qui correspond à la dose de spiroxamine seule qu'il est nécessaire d'appliquer pour obtenir ce même pourcentage de destruction.
La disposition des points obtenue indique donc un effet unilatéral, qualifié en langue anglaise selon la méthode de Tammes citée précédemment de "one sided effect". Cette disposition correspond à une isobole de type II selon ladite méthode (page 74 de la référence bibliographique correspondante déjà citée) et est caractéristique d'une synergie.

Exemple 12 : Essai en serre *in vivo* d'une composition ternaire comprenant les composés (I), IIG (fencaramide) et IIG' (Fosétyl-Al) contre le mildiou de la vigne (*Plasmopara viticola*) :

On utilise un granulé dispersable à 70% de composé I, un granulé dispersable à 50 % de fencaramide, et un granulé dispersable à 80 % de Fosétyl-Al.
On prépare à partir de ces compositions par dilution à l'eau des suspensions diluées correspondant à un volume de pulvérisation de 1000 l/ha. On mélange les suspensions diluées de fencaramide et de Fosétyl-Al de manière à obtenir une suspension mère comprenant ces 2 matières actives dans un rapport Fencaramide/Fosétyl-Al fixe et

égal à 0,1.

On mélange la suspension diluée de composé (I) et cette suspension mère, de manière à obtenir un mélange des 3 matières actives dans le rapport composé (I)/Fencaramide + Fosétyl-Al égal à 1/(1+10) (soit 0,09 ) et 2/(1+10) (soit 0,18).

Des boutures de vigne (variété Chardonnay) sont cultivées dans des godets. Lorsque ces plants sont âgés de 2 mois (stade de développement de 8 à 10 feuilles), ils sont traités par pulvérisation au moyen d'un liquide comprenant soit le composé (I) seul, soit le mélange Fencaramide + Fosétyl-Al, soit le mélange des 3 matières actives. Le volume de pulvérisation de 1000 l/ha permet une couverture des faces inférieures et supérieures des feuilles.

Les plants traités ont été préalablement contaminés (24 heures avant le traitement fongicide) par pulvérisation d'une suspension aqueuse de spores de *Plasmopara viticola* (100 000 sp/$cm^3$). Après contamination, les plants sont laissés à température ambiante 1 heure à 70 % d'humidité relative, puis durant 24 heures à 90 à 100 % d'humidité relative, avant de recevoir le traitement fongicide.

Après le traitement fongicide, les plants sont maintenus 1 heure dans une atmosphère à 70 % d'humidité relative, puis laissés durant 7 jours à 90 à 100 % d'humidité relative.

On procède alors à l'observation des résultats, en comparaison avec les plants témoins également contaminés, mais non traités. On détermine pour celà, par estimation visuelle, la fraction contaminée (estimée en %) de la surface intérieure des feuilles.

Les résultats d'efficacité obtenus sont reportés sous forme de points, correspondant à 70 % de destruction du parasite, et placés dans un diagramme de Tammes qui comporte en abscisse les doses de composé (I), exprimées en mg/l, et en ordonnée les doses du mélange fencaramid + fosétyl-Al (dans le rapport 1/10). exprimées sous la forme de la seule dose de fencaramid dans le mélange, en mg/l.

On obtient le diagramme de la figure 9 dans lequel il apparaît que l'addition d'une dose de composé (I) inférieure à 36 mg/l (qui correspond à la dose de composé (I) seul qu'il est nécessaire d'appliquer pour obtenir la destruction de 70 % du parasite) permet, de façon parfaitement inattendue, d'abaisser la dose du mélange fencaramid/fosétyl-Al (au ratio 1/10) bien en dessous de 34 mg/l (cette valeur correspondant à la dose équivalente de fencaramide dans le dit mélange qu'il est nécessaire d'appliquer pour obtenir ce même pourcentage de destruction).

La disposition des points obtenue indique donc un effet bilatéral, qualifié en langue anglaise selon la méthode de Tammes citée précédemment de "two sided effect". Cette disposition correspond à une isobole de type III selon ladite méthode (page 75 de la référence bibliographique correspondante déjà citée) et est caractéristique d'une synergie.

## Revendications

**1.** Compositions fongicides synergiques comprenant un composé (I) de formule :

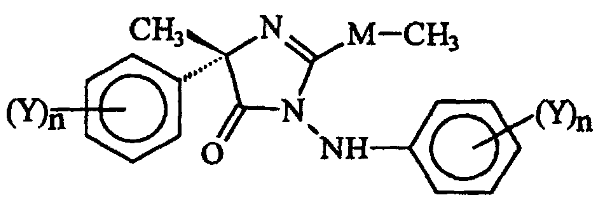

(I)

dans laquelle :

- M représente un atome d'oxygène ou de soufre ;
- n est un nombre entier égal à 0 ou 1 ;
- Y est un atome de fluor ou de chlore, ou un radical méthyle ;

et un composé (II) choisi dans le groupe comprenant :

- le composé (IIA) ou propamocarbe, encore appelé propyl 3-(diméthlylamino)propylcarbamate;
- un composé (IIB) de formule (IIB)

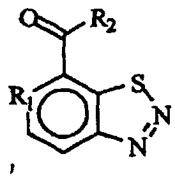

(IIB)

dans laquelle :

- $R_1$ est l'atome d'azote ou le groupe -CH, et
- $R_2$ est le groupe thiométhyl $SCH_3$ ou le groupe diethylamino $N(C_2H_5)_2$,
- le composé (IIC) ou cyprodinil, encore appelé 2-phenylamino-4-cyclopropyl-6-methyl-pyrimidine ;
- le composé (IID) qui est l'acide 2-hydroxy-benzoïque ou acide salicylique, ses esters et ses sels, notamment de métaux alcalins et alcalino-terreux;
- le composé (IIF) ou 8-t-butyl-2-(N-ethyl-N-n-propylamino)-methyl-1,4-dioxaspiro[4.5]decane, encore appelé spiroxamine ;
- le composé (IIG) ou ester isopropylique de l'acide carbamique [2-méthyl-1-(1-p-tolyl-éthylcarbamoyl)-propyl], encore appelé iprovalicarb;
- le composé (IIH) ou 4-chloro-2-cyano-1-dimethylsulfamoyl-5-(4-methylphenyl)imidazole ;

le rapport composé (I)/composé (II) étant compris entre 0,01 et 50, de préférence entre 0,1 et 10.

**2.** Compositions fongicides selon la revendication 1, **caractérisées en ce que** le composé (I) est la (4-S) 4-méthyl-2-méthylthio-4-phényl-1-phénylamino-2-imidazoline-5-one.

**3.** Compositions fongicides selon l'une des revendications 1 à 2, **caractérisées en ce que** le composé (II) est choisi dans le groupe comprenant les composés (IIA), (IIB), (IIC), (IID).

**4.** Compositions fongicides selon l'une des revendications 1 à 3, **caractérisées en ce que** le composé (II) est le composé (IIA) (ou propamocarbe), et le rapport composé (I)/composé (II) est compris entre 0,01 et 10, de préférence entre 0,05 et 1, encore plus préférentiellement entre 0,1 et 1

**5.** Compositions fongicides selon l'une des revendications 1 à 3, **caractérisées en ce que** le composé (II) est le composé (IIB).

**6.** Compositions fongicides selon la revendication 5, **caractérisées en ce que** le composé (IIB) est le S-méthyl ester de l'acide 1,2,3-benzothiadiazole-7-carbothioïque.

**7.** Compositions fongicides selon l'une des revendications 1 à 3, **caractérisées en ce que** le composé (II) est le composé (IID).

**8.** Compositions fongicides selon l'une des revendications 5 à 7, **caractérisées en ce que** le rapport composé (I)/composé (II) est compris entre 0,05 et 50, de préférence entre 0,1 et 10, encore plus préférentiellement entre 0,1 et 5.

**9.** Compositions fongicides selon l'une des revendications 1 à 3, **caractérisées en ce que** le composé (II) est le composé (IIC) et le rapport composé (I)/composé (II) est compris entre 0,05 et 50, de préférence entre 0,1 et 10, encore plus préférentiellement entre 0,2 et 1.

**10.** Compositions fongicides selon l'une des revendications 1 à 2, **caractérisées en ce que** le composé (II) est le composé (IIF).

**11.** Compositions fongicides selon la revendication 10, **caractérisées en ce que** le rapport composé (I)/composé (IIF) est compris entre 0,05 et 10, de préférence entre 0,1 et 5.

**12.** Compositions fongicides selon l'une des revendications 1 à 2, **caractérisées en ce que** le composé (II) est le

composé (IIG).

**13.** Compositions fongicides selon la revendication 12, **caractérisées en ce que** le rapport composé (I)/composé (IIG) est compris entre 0,25 et 5, de préférence entre 0,5 et 4.

**14.** Compositions fongicides selon l'une des revendications 12 ou 13, **caractérisées en ce qu'**elles comprennent en outre un composé (IIG'), choisi parmi:

- les sels d'un mono-alkyl phosphite et d'un cation métallique mono-, di- ou tri-valent, tel que le fosétyl-Al, ou
- l'acide phosphoreux et ses sels alcalins ou alcalino-terreux ;

le ratio molaire (IIG)/(IIG') étant compris entre 0,037 et 0,37, de préférence entre 0,018 et 1,8.

**15.** Compositions fongicides selon la revendication 14, **caractérisées en ce que** le composé (IIG') est le Fosétyl-Al, et le ratio pondéral (IIG)/(IIG') est compris entre 0,01 et 1, de préférence entre 0,05 et 5.

**16.** Compositions fongicides selon l'une des revendications 1 à 2, **caractérisées en ce que** le composé (II) est le composé (IIH).

**17.** Compositions fongicides selon la revendication 16, **caractérisées en ce que** le rapport composé (I)/composé (II) est compris entre 0,05 et 5, de préférence entre 0,5 et 2.

**18.** Compositions fongicides selon l'une des revendications 1 à 17, caractérisées en ce que'elles comprennent outre les composés (I) et (II) un support inerte convenable en agriculture et éventuellement un tensio actif convenable en agriculture.

**19.** Compositions fongicides selon l'une des revendications 1 à 18, caractérisées en ce que'elles comprennent de 0,5 à 95 % de la combinaison du composé (I) et du composé (II).

**20.** Procédé de lutte, à titre curatif ou préventif, contre les champignons phytopathogènes des cultures, **caractérisé en ce que** l'on applique aux végétaux à traiter une quantité efficace et non phytotoxique d'une composition fongicide selon l'une des revendications 1 à 19.

**21.** Procédé selon la revendication 20, **caractérisé en ce que** la composition fongicide est appliquée par pulvérisation d'un liquide sur les parties aériennes des cultures à traiter.

**22.** Procédé selon l'une des revendications 20 ou 21, **caractérisé en ce que** la quantité de composition fongicide correspond à une dose de composé (I) comprise entre 10 et 500 g/ha, de préférence entre 20 et 300 g/ha.

**Patentansprüche**

**1.** Synergistische fungizide Zusammensetzungen, enthaltend eine Verbindung (I) der Formel

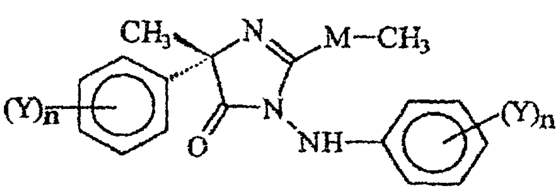

(I),

in der

- M ein Sauerstoff- oder Schwefelatom bedeutet,
- n eine ganze Zahl von 0 oder 1 darstellt,

- Y ein Fluor- oder Chloratom oder einen Methylrest darstellt,

sowie eine Verbindung (II) aus der Gruppe

- Verbindung (IIA) bzw. Propamocarb, auch unter der Bezeichnung 3-(Dimethylamino)propylcarbaminsäurepropylester bekannt,
- eine Verbindung (IIB) der Formel (IIB)

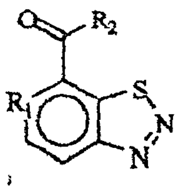

(IIB),

in der
- $R_1$ das Stickstoffatom oder die Gruppe -CH darstellt und
- $R_2$ die Thiomethylgruppe SCH3 oder die Diethylaminogruppe $N(C_2H_5)_2$ darstellt,

  - die Verbindung (IIC) bzw. Cyprodinil, auch unter der Bezeichnung 2-Phenylamino-4-cyclopropyl-6-methylpyrimidin bekannt,
  - die Verbindung (IID), bei der es sich um 2-Hydroxybenzolsäure oder Salicylsäure, ihre Ester und ihre Salze, insbesondere die Alkalimetall- und Erdalkalimetallsalze, handelt,
  - die Verbindung (IIF) bzw. 8-t-Butyl-2-(N-ethyl-N-n-propylamino)-methyl-1,4-dioxaspiro[4.5]decan, auch unter der Bezeichnung Spiroxamin bekannt,
  - die Verbindung (IIG) bzw. [2-Methyl-1-(1-p-tolylethylcarbamoyl)propyl]carbaminsäureisopropylester, auch unter der Bezeichnung Iprovalicarb bekannt,
  - die Verbindung (IIH) bzw. 4-Chlor-2-cyan-1-dimethylsulfamoyl-5-(4-methylphenyl)imidazol,

wobei das Verhältnis zwischen Verbindung (I) und Verbindung (II) 0,01 bis 50, vorzugsweise 0.1 bis 10 beträgt.

2. Fungizide Zusammensetzungen nach Anspruch 1, **dadurch gekennzeichnet, daß** es sich bei der Verbindung (I) um (4-S)-4-Methyl-2-methylthio-4-phenyl-1-phenylamino-2-imidazolin-5-on handelt.

3. Fungizide Zusammensetzungen nach Anspruch 1 oder 2, **dadurch gekennzeichnet, daß** die Verbindung (II) aus der Gruppe der Verbindungen (IIA), (IIB), (IIC), (IID) stammt.

4. Fungizide Zusammensetzungen nach einem der Anspüche 1 bis 3, **dadurch gekennzeichnet, daß** es sich bei der Verbindung (II) um die Verbindung (IIA) (bzw. Propamocarb) handelt und das Verhältnis zwischen Verbindung (I) und Verbindung (II) 0,01 bis 10, vorzugsweise 0,05 bis 1, noch stärker bevorzugt 0,1 bis 1 beträgt.

5. Fungizide Zusammensetzungen nach einem der Ansprüche 1 bis 3, **dadurch gekennzeichnet, daß** es sich bei der Verbindung (II) um die Verbindung (IIB) handelt.

6. Fungizide Zusammensetzungen nach Anspruch 5, **dadurch gekennzeichnet, daß** es sich bei der Verbindung (IIB) um den 1,2,3-Benzothiadiazol-7-thiocarbonsäure-S-methylester handelt.

7. Fungizide Zusammensetzungen nach einem der Ansprüche 1 bis 3, **dadurch gekennzeichnet, daß** es sich bei der Verbindung (II) um die Verbindung (IID) handelt.

8. Fungizide Zusammensetzungen nach einem der Ansprüche 5 bis 7, **dadurch gekennzeichnet, daß** das Verhältnis zwischen Verbindung (I) und Verbindung (II) 0,05 bis 50, vorzugsweise 0,1 bis 10, noch stärker bevorzugt, 0,1 bis 5 beträgt.

9. Fungizide Zusammensetzungen nach einem der Ansprüche 1 bis 3, **dadurch gekennzeichnet, daß** es sich bei der Verbindung (II) um die Verbindung (IIC) handelt und das Verhältnis zwischen Verbindung (I) und Verbindung (II) 0,05 bis 50, vorzugsweise 0,1 bis 10, noch stärker bevorzugt 0,2 bis 1 beträgt.

10. Fungizide Zusammensetzungen nach Anspruch 1 oder 2, **dadurch gekennzeichnet, daß** es sich bei der Verbindung (II) um die Verbindung (IIF) handelt.

11. Fungizide Zusammensetzungen nach Anspruch 10, **dadurch gekennzeichnet, daß** das Verhältnis zwischen Verbindung (I) und Verbindung (IIF) 0,05 bis 10, vorzugsweise 0,1 bis 5 beträgt.

12. Fungizide Zusammensetzungen nach Anspruch 1 oder 2, **dadurch gekennzeichnet, daß** es sich bei der Verbindung (II) um die Verbindung (IIG) handelt.

13. Fungizide Zusammensetzungen nach Anspruch 12, **dadurch gekennzeichnet, daß** das Verhältnis zwischen Verbindung (I) und Verbindung (IIG) 0,25 bis 5, vorzugsweise 0,5 bis 4 beträgt.

14. Fungizide Zusammensetzungen nach Anspruch 12 oder 13, **dadurch gekennzeichnet, daß** sie weiterhin eine Verbindung (IIG') aus der Gruppe

- Salze eines Monoalkylphosphits und eines ein-, zwei- oder dreiwertigen Metalkations, wie Fosetyl-Al, oder
- phosphorige Säure und ihre Alkalimetall- oder Erdalkalimetallsalze enthält, wobei das Molverhältnis (IIG)-(IIG') 0,037 bis 0,37, vorzugsweise 0,018 bis 1,8 beträgt.

15. Fungizide Zusammensetzungen nach Anspruch 14, **dadurch gekennzeichnet, daß** es sich bei der Verbindung (IIG') um Fosetyl-Al handelt, wobei das Gewichtsverhältnis (IIG)-(IIG') 0,01 bis 1, vorzugsweise 0,05 bis 5 beträgt.

16. Fungizide Zusammensetzungen nach Anspruch 1 oder 2, **dadurch gekennzeichnet, daß** es sich bei der Verbindung (II) um die Verbindung (IIH) handelt.

17. Fungizide Zusammensetzungen nach Anspruch 16, **dadurch gekennzeichnet, daß** das Verhältnis zwischen Verbindung (I) und Verbindung (II) 0,05 bis 5, vorzugsweise 0,5 bis 2 beträgt.

18. Fungizide Zusammensetzungen nach einem der Ansprüche 1 bis 17, **dadurch gekennzeichnet, daß** sie außer den Verbindungen (I) und (II) einen landwirtschaftlich geeigneten inerten Trägerstoff sowie gegebenenfalls ein landwirtschaftlich geeignetes Tensid enthalten.

19. Fungizide Zusammensetzungen nach einem der Ansprüche 1 bis 18, **dadurch gekennzeichnet, daß** sie 0,5 bis 95% der Kombination der Verbindung (I) und der Verbindung (II) enthalten.

20. Verfahren zur kurativen oder vorbeugenden Bekämpfung von phytopathogenen Pilzen in Kulturpflanzen, **dadurch gekennzeichnet, daß** man eine fungizide Zusammensetzung nach einem der Ansprüche 1 bis 19 in einer wirksamen, nicht phytotoxischen Menge auf die zu behandelnden Pflanzen ausbringt.

21. Verfahren nach Anspruch 20, **dadurch gekennzeichnet, daß** man die fungizide Zusammensetzung durch Versprühen einer Flüssigkeit auf die oberirdischen Teile der zu behandelnden Kulturpflanzen ausbringt.

22. Verfahren nach Anspruch 20 oder 21, **dadurch gekennzeichnet, daß** die fungizide Zusammensetzung mengenmäßig einer Ausbringungsmenge von 10 bis 500 g/ha, vorzugsweise 20 bis 300 g/ha, an Verbindung (I) entspricht.

## Claims

1. Synergistic fungicidal compositions comprising a compound (I) of formula:

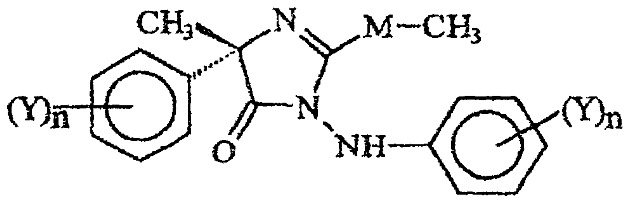

(I)

in which:

- M represents an oxygen or sulphur atom;
- n is an integer equal to 0 or 1;
- Y is a fluorine or chorine atom, or a methyl radical;

and a compound (II) chosen from the group comprising:

- compound (IIA) or propamocarb, also called propyl 3-(dimethylamino)propylcarbamate;
- a compound (IIB) of formula (IIB)

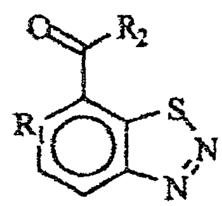

(IIB)

in which:

- $R_1$ is a nitrogen atom or the group -CH, and
- $R_2$ is the thiomethyl group $SCH_3$ or the diethylamino group $N(C_2H_5)_2$,
- the compound (IIC) or cyprodinil, also called 2-phenylamino-4-cyclopropyl-6-methylpyrimidine;
- the compound (IID) which is 2-hydroxybenzoic acid or salicylic acid, its esters and its salts, in particular of alkali or alkaline-earth metals;
- the compound (IIF) or 8-t-butyl-2-(N-ethyl-N-n-propylamino)methyl-1,4-dioxaspiro[4.5]decane, also called spiroxamine;
- the compound (IIG) or the isopropyl ester of [2-methyl-1-(1-p-tolylethylcarbamoyl)propyl]-carbamic acid, also called iprovalicarb;
- the compound (IIH) or 4-chloro-2-cyano-1-di-methylsulphamoyl-5-(4-methylphenyl)imidazole; the compound (I)/compound (II) ratio being between 0.01 and 50, preferably between 0.1 and 10.

2. Fungicidal compositions according to Claim 1, **characterized in that** compound (I) is (4-S)-4-methyl-2-methylthio-4-phenyl-1-phenyl-amino-2-imidazolin-5-one.

3. Fungicidal compositions according to either of Claims 1 and 2, **characterized in that** compound (II) is chosen from the group comprising compounds (IIA), (IIB), (IIC), (IID).

4. Fungicidal compositions according to one of Claims 1 to 3, **characterized in that** compound (II) is compound (IIA) (or propamocarb), and the compound (I)/compound (II) ratio is between 0.01 and 10, preferably between 0.05 and

1, still more preferably between 0.1 and 1.

5. Fungicidal compositions according to one of Claims 1 to 3, **characterized in that** compound (II) is compound (IIB).

6. Fungicidal compositions according to Claim 5, **characterized in that** compound (IIB) is the S-methyl ester of 1,2,3-benzothiadiazole-7-carbothioic acid.

7. Fungicidal compositions according to one of Claims 1 to 3, **characterized in that** compound (II) is compound (IID).

8. Fungicidal compositions according to one of Claims 5 to 7, **characterized in that** the compound (I)/compound (II) ratio is between 0.05 and 50, preferably between 0.1 and 10, still more preferably between 0.1 and 5.

9. Fungicidal compositions according to one of Claims 1 to 3, **characterized in that** compound (II) is compound (IIC) and the compound (I)/compound (II) ratio is between 0.05 and 50, preferably between 0.1 and 10, still more preferably between 0.2 and 1.

10. Fungicidal compositions according to either of Claims 1 and 2, **characterized in that** compound (II) is compound (IIF).

11. Fungicidal compositions according to Claim 10, **characterized in that** the compound (I)/compound (IIF) ratio is between 0.05 and 10, preferably between 0.1 and 5.

12. Fungicidal compositions according to either of Claims 1 and 2, **characterized in that** compound (II) is compound (IIG).

13. Fungicidal compositions according to Claim 12,
**characterized in that** the compound (I)/compound (IIG) ratio is between 0.25 and 5, preferably between 0.5 and 4.

14. Fungicidal compositions according to either of Claims 12 and 13, **characterized in that** they comprise, in addition, a compound (IIG'), chosen from:

- the salts of a monoalkyl phosphite and of a mono-, di- or trivalent metal cation, such as fosetyl-Al, or
- phosphorous acid and its alkali or alkaline-earth metal salts;
  the (IIG)/(IIG') molar ratio being between 0.037 and 0.37, preferably between 0.018 and 1.8.

15. Fungicidal compositions according to Claim 14, **characterized in that** compound (IIG') is fosetyl-Al, and the (IIG) /(IIG') weight ratio is between 0.01 and 1, preferably between 0.05 and 5.

16. Fungicidal compositions according to either of Claims 1 and 2, **characterized in that** compound (II) is compound (IIH).

17. Fungicidal compositions according to Claim 16, **characterized in that** the compound (I)/compound (II) ratio is between 0.05 and 5, preferably between 0.5 and 2.

18. Fungicidal compositions according to one of Claims 1 to 17, **characterized in that** they comprise, in addition to compounds (I) and (II), an agriculturally acceptable inert carrier and optionally an agriculturally acceptable surfactant.

19. Fungicidal compositions according to one of Claims 1 to 18, **characterized in that** they comprise from 0.5 to 95% of the compound (I) and compound (II) combination.

20. Method for controlling, curatively or preventively, the phytopathogenic fungi of crops, **characterized in that** an effective and nonphytotoxic quantity of a fungicidal composition according to one of Claims 1 to 19 is applied to the plants to be treated.

21. Method according to Claim 20, **characterized in that** the fungicidal composition is applied by spraying a liquid onto the aerial parts of the crops to be treated.

**22.** Method according to either of Claims 20 and 21, **characterized in that** the quantity of fungicidal composition corresponds to a dose of compound (I) of between 10 and 500 g/ha, preferably between 20 and 300 g/ha.

Figure 1

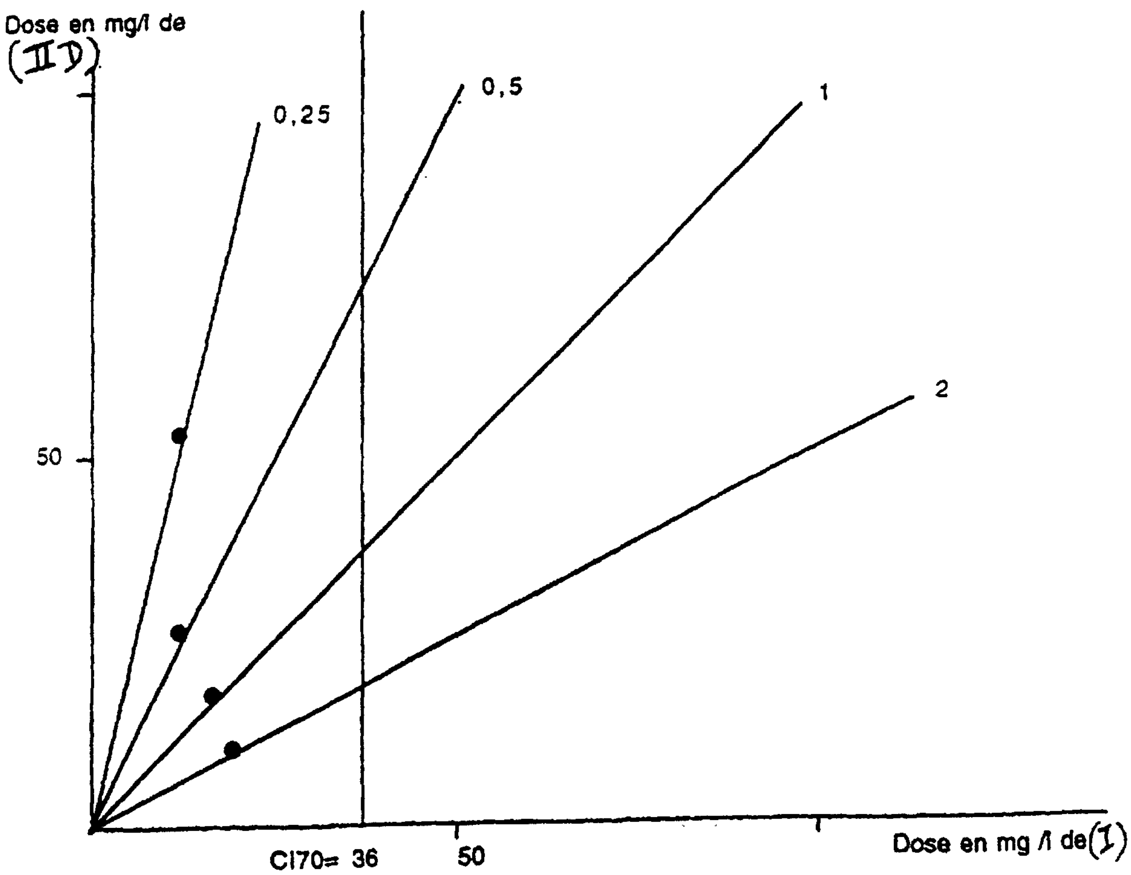

**Figure 2**

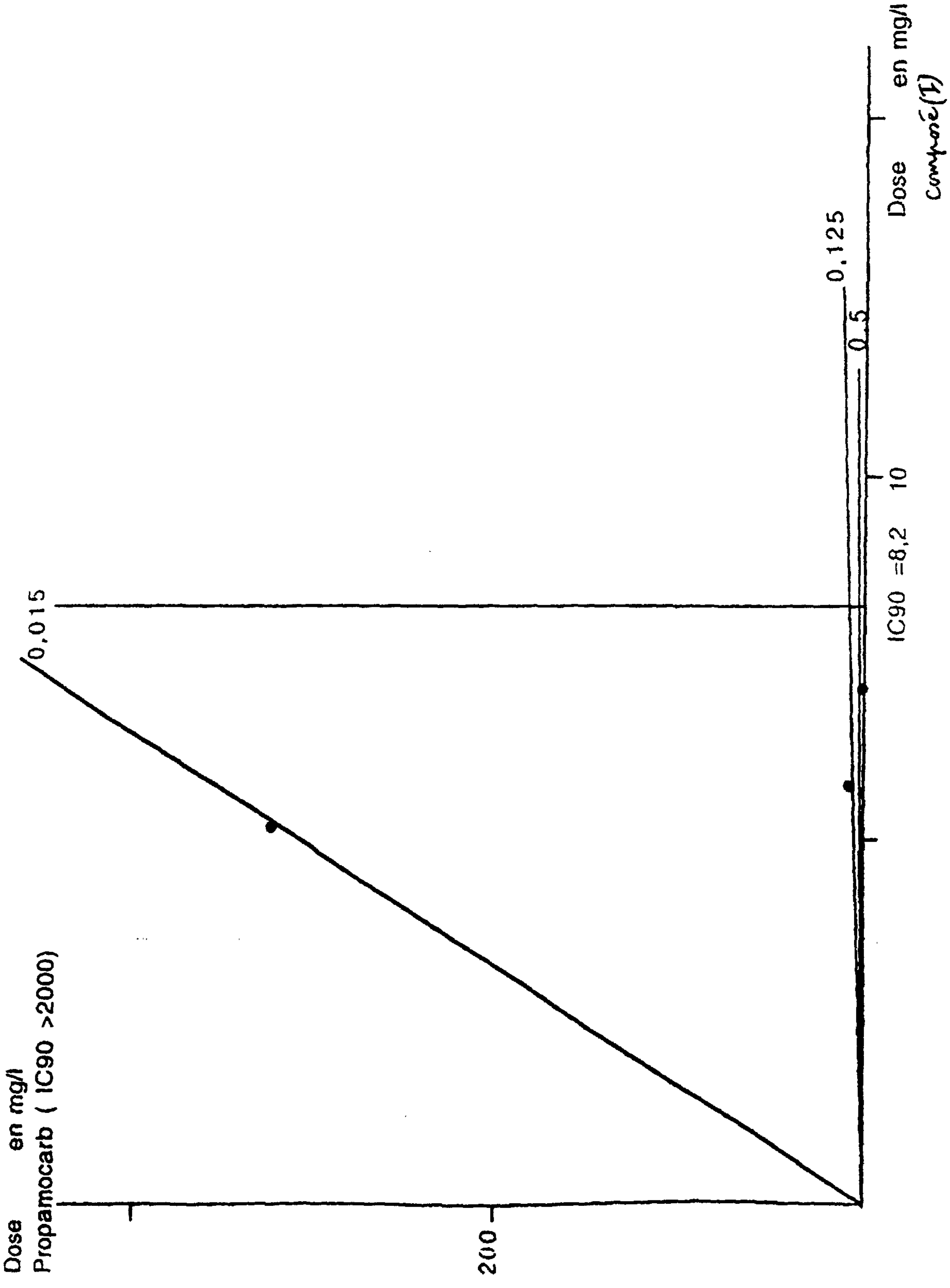
Dose
Propamocarb
en mg/l
( IC90 >2000)
200
0,015
IC90 =8,2
10
0,5
0,125
Dose
composé (I)
en mg/l

Figure 3

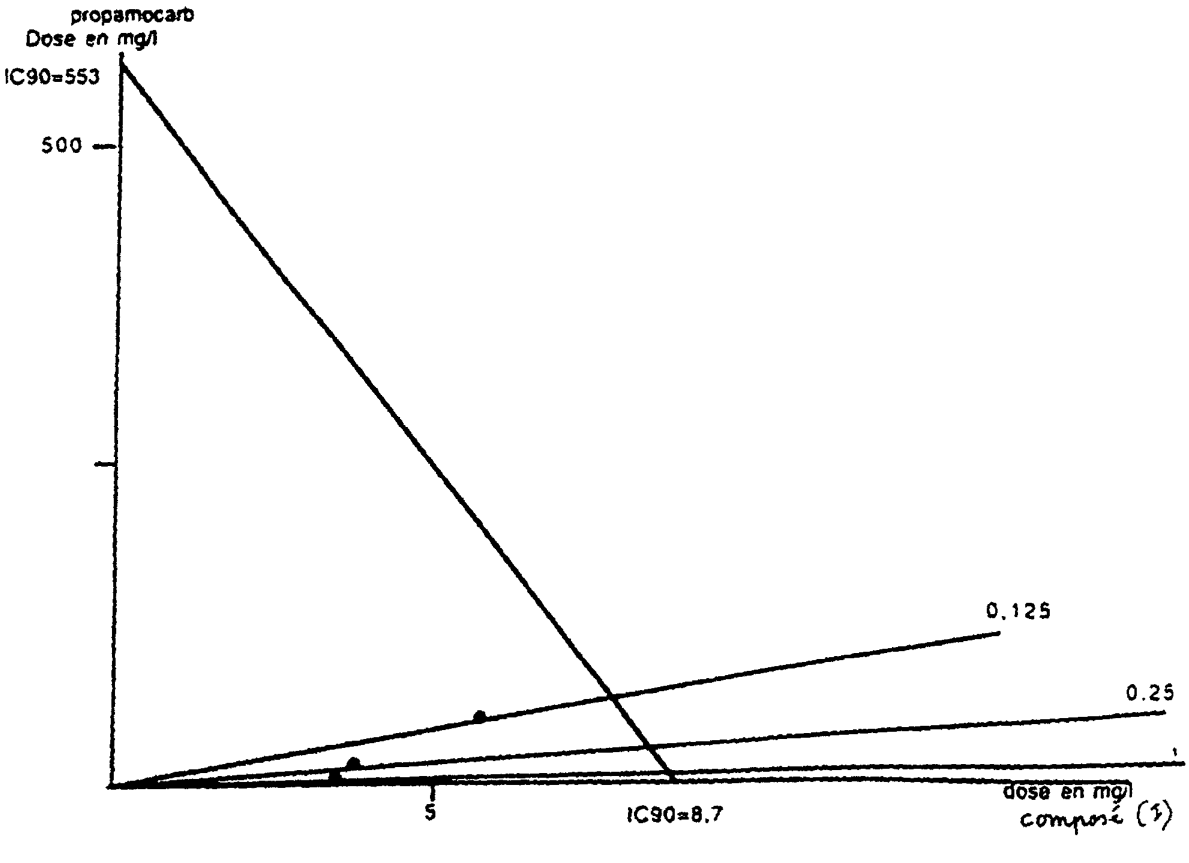
propamocarb
Dose en mg/l
IC90=553
500
0.125
0.25
1
dose en mg/l
composé (1)
5
IC90=8.7

Figure 4

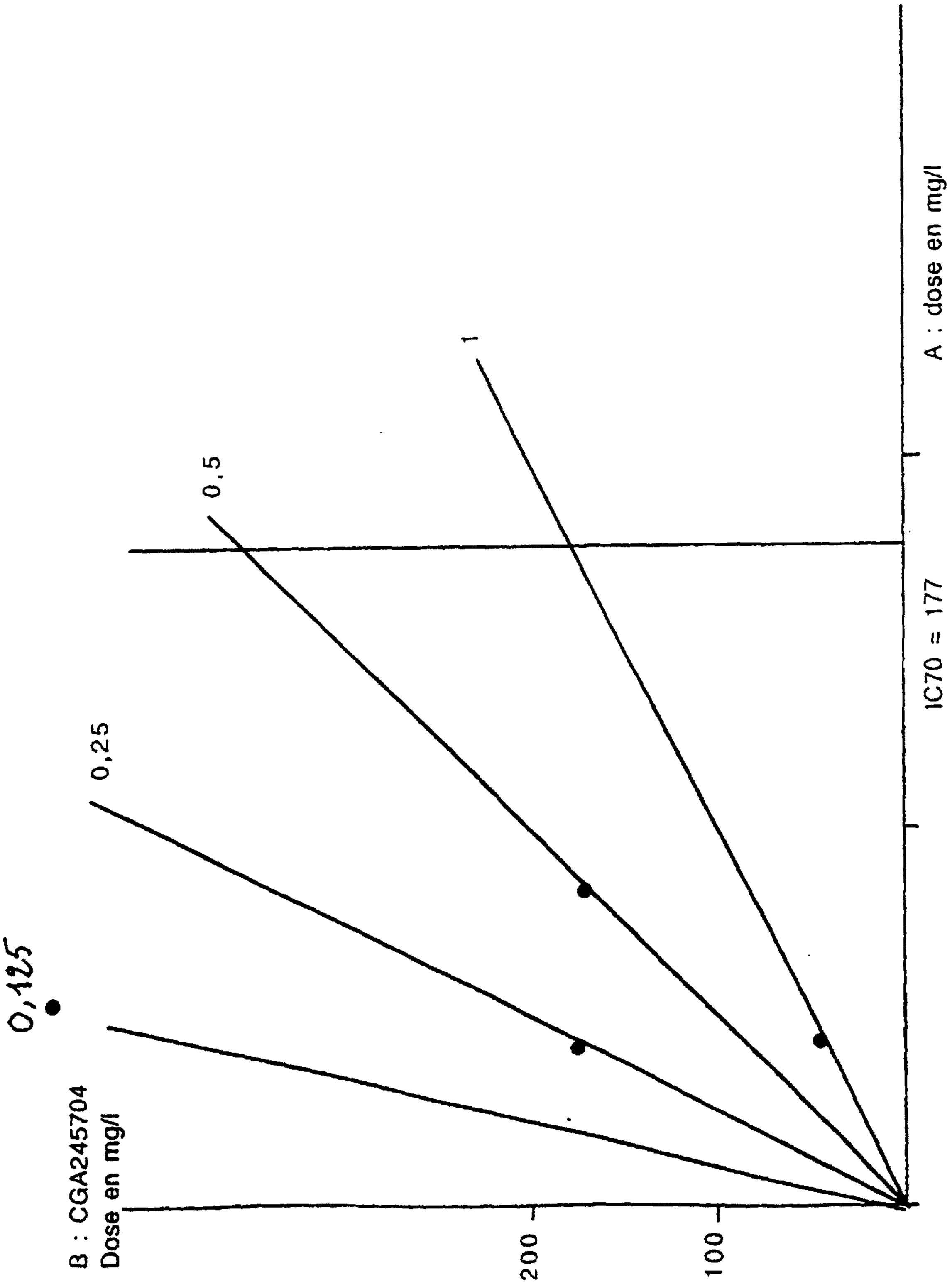
B : CGA245704
Dose en mg/l
200
100
0,125
0,25
0,5
1
IC70 = 177
A : dose en mg/l

Figure 5

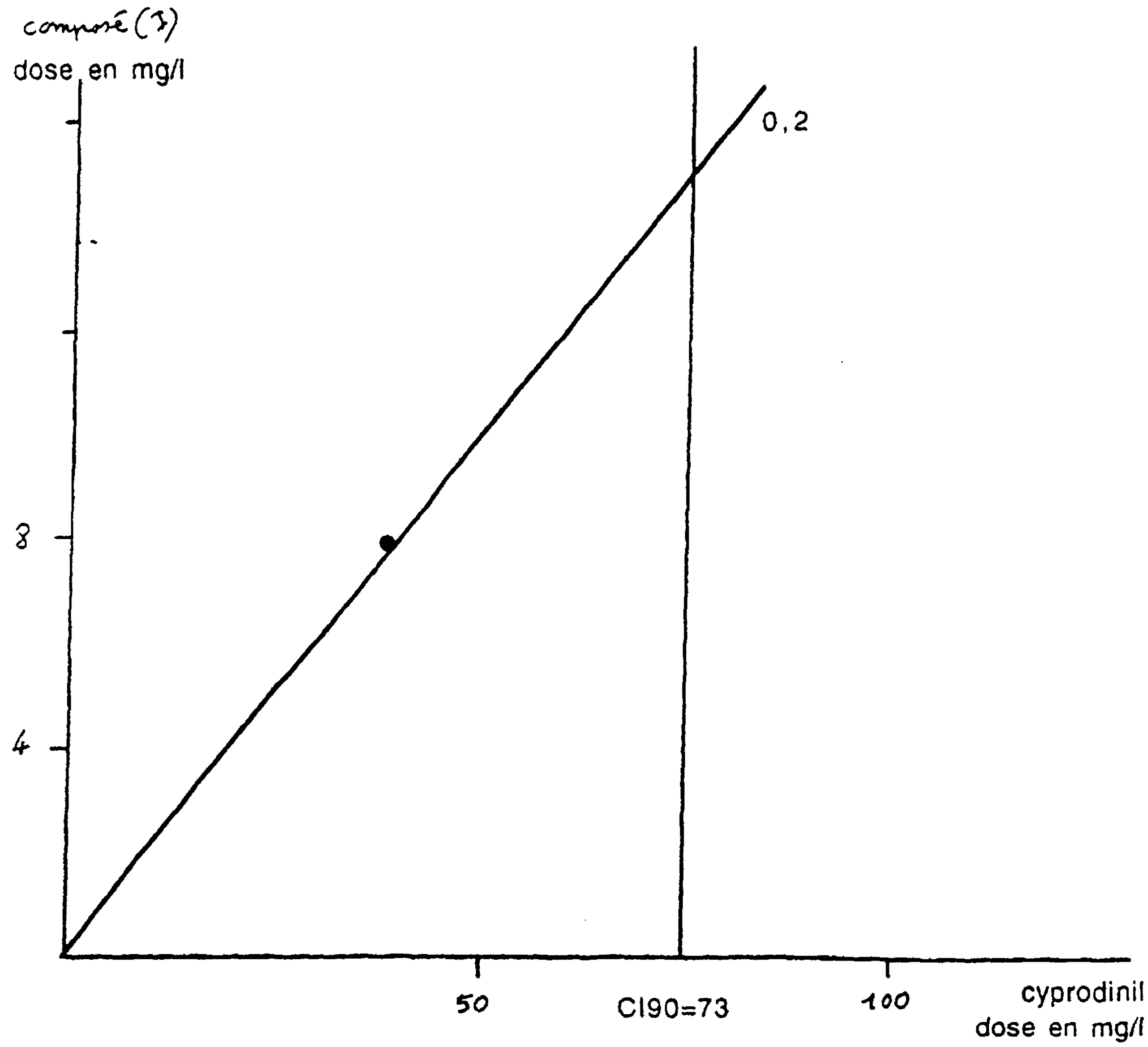
composé (3)
dose en mg/l
0,2
8
4
50
CI90=73
100
cyprodinil
dose en mg/l

Figure 6

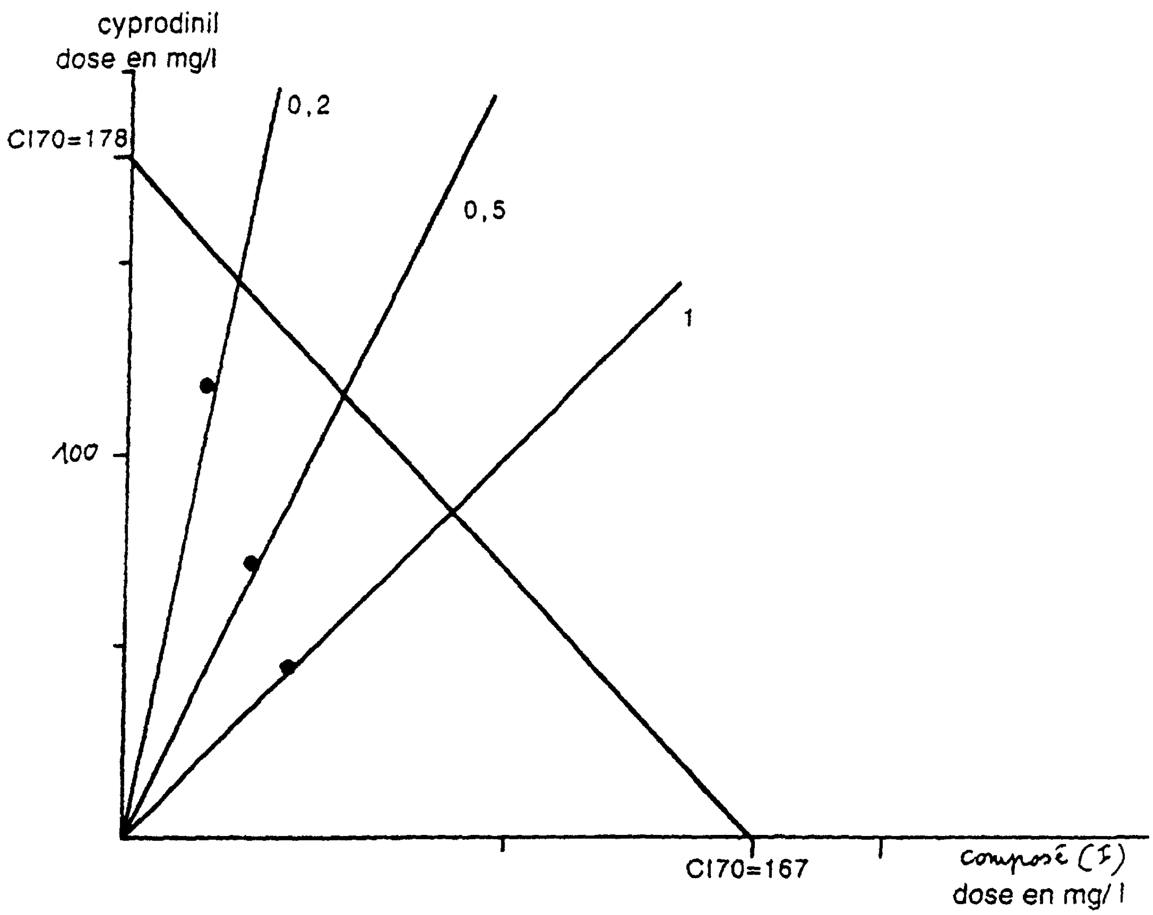
cyprodinil
dose en mg/l
CI70=178
100
0,2
0,5
1
CI70=167
composé (I)
dose en mg/ l

Figure 7

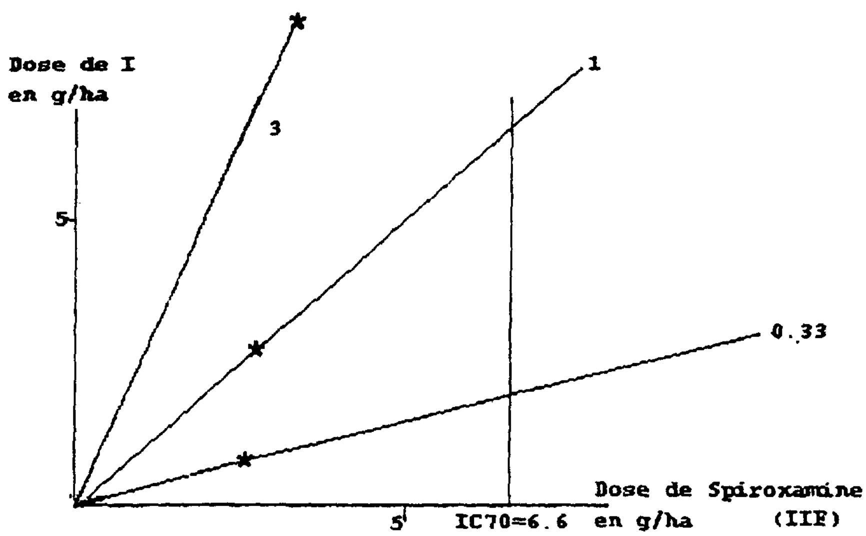
Dose de I
en g/ha
3
1
5
0.33
5
IC70=6.6
Dose de Spiroxamine
en g/ha
(IIF)

Figure 8

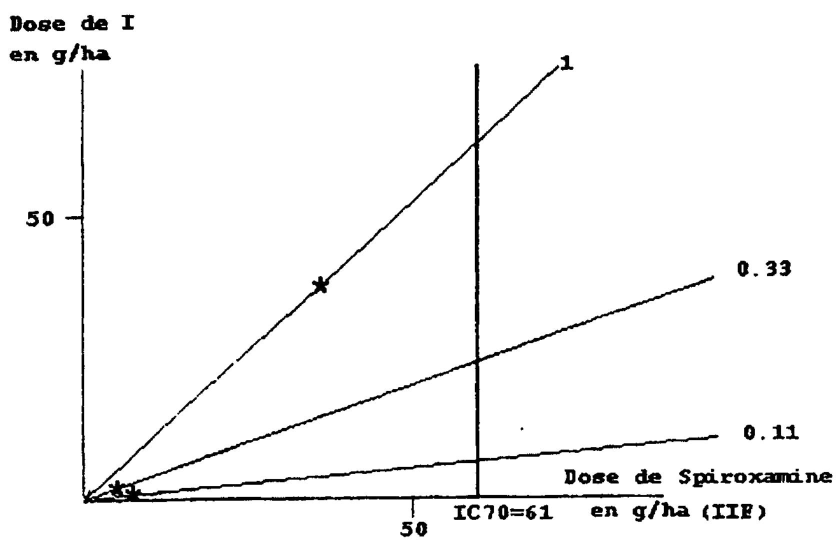
Dose de I
en g/ha
50
1
0.33
0.11
Dose de Spiroxamine
en g/ha (IIE)
50
IC70=61

Figure 9

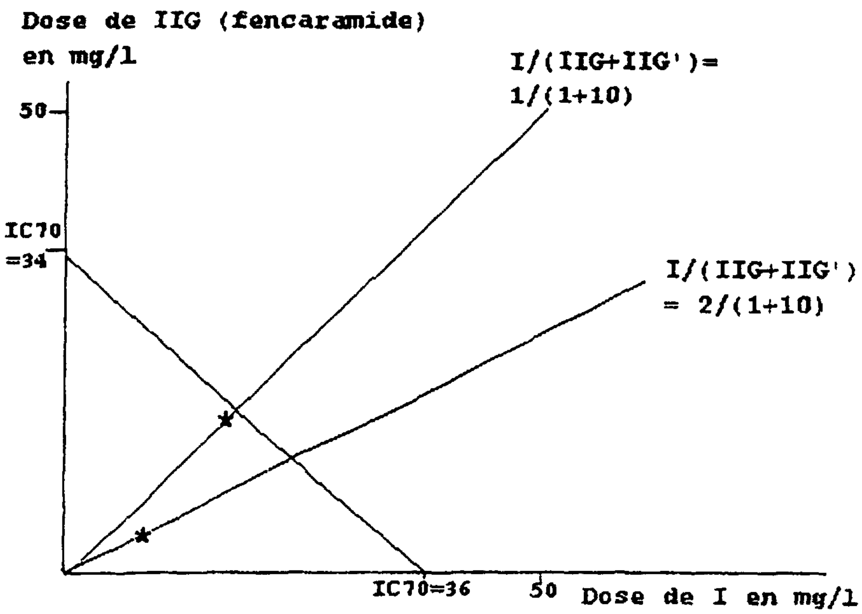
Dose de IIG (fencaramide)
en mg/l
50
IC70
=34
I/(IIG+IIG')=
1/(1+10)
I/(IIG+IIG')
= 2/(1+10)
IC70=36
50
Dose de I en mg/l